# EUROPEAN PATENT APPLICATION

(11) **EP 3 653 467 A1**
(43) Date of publication of application: **20.05.2020**
(21) Application number: 19204897.3
(22) Date of filing: 23.10.2019
(51) Int. Cl.: B62D 6/00

(54) **A CONTROLLER AND METHOD TO ASSIST STEERING OF A VEHICLE HAVING EPS**

(30) Priority: 16.11.2018 IN 201841043141
(71) Applicant: Robert Bosch GmbH, 70442 Stuttgart (DE); Robert Bosch Engineering And Business Solutions Limited, Bangalore 560 095 State of Karnataka (IN)
(72) Inventor: Komala Kalyanraman, Yerra, 533106 Rajahmundry, Andhra Pradesh (IN); Rangarajan, Varadan, 73557 Mutlangen (DE)
(74) Representative: Bee, Joachim

(57) **Abstract**

The various embodiment herein provides a controller 110 to assist steering of the vehicle having an EPS system 100. The controller 110 is adapted to measure a set of input signals of the steering wheel 102, via the sensor 104, an angle sensor, a timer within the controller 110, on rotation by the driver, at different level of torque assistance from the steering motor 114 of the EPS system 100. The controller 110 then store the set of input signals measured for different level of torque assistance as a data set 108 in a memory element 106 of the controller 110. The controller 110 processes the data set 108 through a torque assist model 112 and calculates a required torque. The controller 110 then drives the steering motor 114 to provide the required torque to the steering rack 120 and assists the driver in steering the vehicle.

## Description

### Field of the invention:

The present invention relates to a controller and method to assist steering of a vehicle having an Electronic Power Steering (EPS) system.

### Background of the invention:

A patent literature JP2024269 discloses a device for controlling steering force of power steering. The purpose of the prior art is to effect the optimum steering assisting force for the arm strength of each driver by providing an arm strength measuring device which measures the arm strength of a driver and transmits same to a controller and controlling a steering assisting force in accordance with the measured arm strength of the driver. The prior art comprises A feeding passage, a returning passage, and a pair of actuator passages are connected to a steering valve interlocked with the steering operation of a steering handle, and a pump is connected to the feeding passage while connecting a tank to the returning passage. The actuator passages are connected to the pressure chambers of a power cylinder respectively. An electromagnetic flow control valve is provided in a bypass connected to the feeding passage and controlled via a controller in accordance with the output of an arm strength measuring device provided in the vicinity of a driver's seat. The arm strength measuring device measures the degree of arm strength from the outputs of a steering angle sensor and a muscular strength sensor stuck on the arm of a driver.

### Brief description of the accompanying drawings:

An embodiment of the disclosure is described with reference to the following accompanying drawings,
Fig. 1 illustrates a block diagram of the controller and Electronic Power System (EPS) of a vehicle, according to an embodiment of the present invention, and
Fig. 2 illustrates a method for assisting a driver to steer a vehicle, according to the present invention.

### Detailed description of the embodiments:

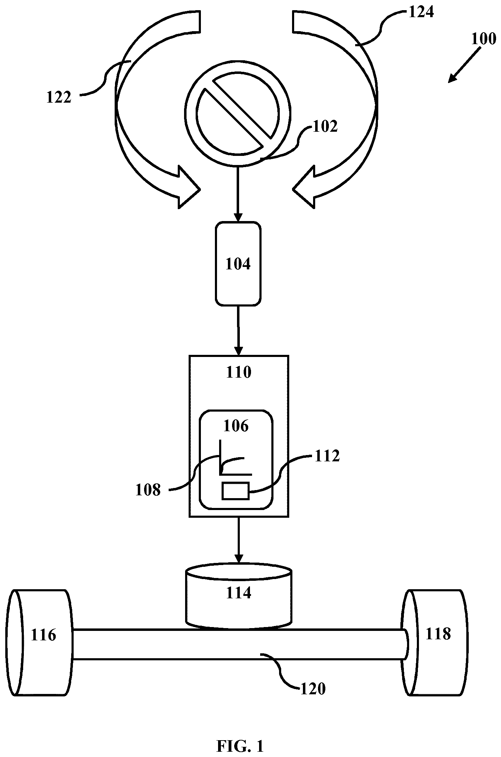

Fig. 1 illustrates a block diagram of the controller and Electronic Power System (EPS) of a vehicle, according to an embodiment of the present invention. A basic structure of EPS system 100 is shown which is state of the art and obvious for a skilled person. The EPS system 100 comprises a steering wheel 102 connected to a steering column (not shown). The steering column houses a torsion bar sensor 104 for detection of input torque on rotation of the steering wheel 102. The sensor 104 is connected to the controller 110. The controller 110 measures the value of the input torque and controls a steering motor 114 to move the steering rack 120 in a required direction. The steering racks 120 are coupled to the wheels 116, 118 of the vehicle. The steering wheel 102 and the steering motor 114, both are coupled to the steering rack 120.

The controller 110 is provided to assist steering of the vehicle having an EPS system 100. The controller 110 is adapted to measure a set of input signals of the steering wheel 102, via the sensor 104, an angle sensor (now shown), a timer within the controller 110 etc, on rotation by a driver, at different level of torque assistance from the steering motor 114 of the EPS system 100. The controller 110 then stores the set of input signals measured for different level of torque assistance as a data set 108 in a memory element 106 of the controller 110. The controller 110 processes the data set 108 through a torque assist model 112 and calculates a required torque. The controller 110 then drives the steering motor 114 to provide the required torque to the steering rack 120 and assists the driver in steering the vehicle.

The controller 110 learns and adapts to the arm strength of a driver and accordingly provides the torque assistance through the steering motor 114. The set of input signals comprises an input torque of the driver given to the steering wheel 102, a corresponding rotation angle of the steering wheel 102 and a time taken for corresponding rotation of the steering wheel 102. The controller 110 measures the set of input signals when a learn mode is active. Further, when the learn mode is active the vehicle is in any one of a stationary state and a driven state. The activation of the learn mode is done through a press of a dedicated button on the dashboard or on a touch screen based infotainment system.

During the learn mode, the driver is instructed to follow a test sequence comprising rotation of the steering wheel 102 to certain angle at different level of torque assistance by the steering motor 114 selected from a group comprising 0%, 25%, 50%, 75%, 100%, and between the levels. For example: In a first case, 25% of torque assistance is provided by the steering motor 114. The driver is instructed to rotate the steering wheel 102 to three (configurable) full rotation in clockwise direction 124 and/or anti-clockwise direction 122. In a second case, 65% of torque assistance is provided by the steering motor 114, and the driver is again instructed to rotate the steering wheel 102 to three full rotation in clockwise direction 124 and/or anti-clockwise direction 122. In all the above cases and other cases, the set of input signals are measured and recorded/stored by the controller 110 in the memory element 106 as the data set 108.

The torque assist model 112 in the controller 110 comprises at least one of a Machine Learning model and a Neural Network. The torque assist model 112 is function of at least one of a width of the vehicle, a wheelbase, a length of an axle, a weight of the vehicle, velocity of the vehicle, a geographical location and characteristics of the steering motor 114. The torque assist model 112 along with the set of input signals, computes a required torque which is to be provided to the driver while steering. Once calculated, the controller 110 drives the steering motor 114 to deliver the required torque to the steering rack 120 while the driver is giving the remainder of the torque as per his/her arm strength or comfortability.

In accordance to another embodiment of the present invention, at least one data set 108 is stored for at least one driver in the memory element 106 of the controller 110. For example: A first driver is an old age lady, with a first data set 108 and corresponding required torque. Similarly, a second driver for the same vehicle is a young man with a second data set 108 and a corresponding required torque. Thus, the controller 110 is able to adapt to and give assistance to different drivers while steering. Therefore, the torque assist model 112 is also a function of profile of the driver which is based on the respective data set 108. The profile of the driver, which is also stored in the memory element 106, comprises age, health conditions, gender, preferences of steering and the like. The torque assist model 112 uses the driver's profile along with other parameters, disclosed above, in computing the required torque.

An example of working the present invention in a stationary vehicle is provided. In the vehicle which is ON (Ignition ON with Engine Running), but stationary.
a) The steering motor 114 is turned ON and assistance is enabled to 100%. Now, the driver is instructed to
b) Turn the steering wheel 102 three full turns in clockwise direction 124, then the steering wheel 102 is allowed to return back to initial position based on active return.
c) The controller 110 records and stores the set of input signals in the memory element 106.
d) The above steps a), b) and c) are repeated with 75%, 50%, 25% and 10% assistance (other level of assistance are also possible). A visual instruction manual or step-by-step audio assistant is provided through the infotainment system of the vehicle to guide the vehicle.
e) The steering pattern (set of input signals) of the driver stored are processed by the torque assist model 112 to determine the required torque for the driver. The torque assist model 112 is stored in the memory element 106 of the controller 110.
The controller 110 is able to determine the necessary boost or reduction in the required torque, making conducive for the driver who seeks lighter or heavier steering.

In an alternate embodiment, the controller 110 is part of the EPS system 100 which is used in a test vehicle or a test bench. A user (who visits a vehicle manufacturer to buy a vehicle) sits and steers the steering wheel 102 of the test vehicle or test bench. After the required inputs signals have been processed, the trained torque assist model 112 is stored or ported in the Electronic Control Unit (ECU) of the EPS system 100 of the actual vehicle.

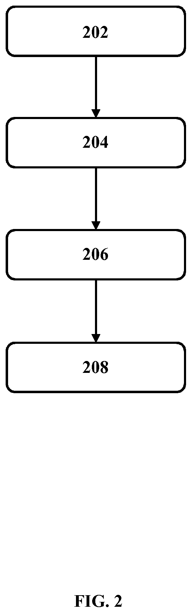

Fig. 2 illustrates a method for assisting a driver to steer a vehicle, according to the present invention. The method is provided for assisting steering a vehicle having the EPS system 100. The method comprising the steps of, a step 202 comprising measuring the set of input signals of the steering wheel 102 on rotation by the driver at different level of torque assistance from the steering motor 114 of the EPS system 100. A step 204 comprises storing the set of input signals measured for different level of torque assistance as the data set 108 in the memory element 106 of the controller 110. The data set 108 is usually stored in a table representable by a curve. A step 206 comprises processing the data set 108 through the torque assist model 112 and calculating the required torque. A step 208 comprises driving the steering motor 114 to provide the required torque to the steering rack 120 of the EPS system 100 and assisting the driver in steering the vehicle.

The set of input signals comprises an input torque of a driver, a rotation angle of the steering wheel 102 and a time taken for corresponding rotation of the steering wheel 102. The step 202 comprising measuring the set of input signals is performed after a learn mode is activated while the vehicle is in any one of a stationary state and a driven state. The measuring of plurality of input torque comprises instructing the driver to follow a test sequence of rotating of the steering wheel 102 to certain angle at different level of torque provided by the steering motor 114 selected from a group comprising 0%, 25%, 50%, 75%, 100% and between the levels. The torque assist model 112 comprises at least one of the ML model and the neural network. The step 204 comprising storing the plurality of input torque as data set 108 comprises storing for at least one driver in the memory element 106.

The torque assist model 112 is function of at least one of the width of the vehicle, a wheelbase, a length of an axle, a weight of the vehicle, a velocity of the vehicle, characteristics of the steering motor 114, the geographical location and a driver's profile.

A method of working the present invention is provided. The EPS system 100 is provided with the controller 110. The controller 110 takes input from the driver of the vehicle form the activation of the learn mode, which corresponds to the beginning of a start learning input. The driver sits in the seat and follows instructions to rotate the steering wheel 102 in stipulated time when different torques are applied by the steering motor 114.

### Example:

a) With mechanical steering (0% assistance) apply maximum possible input torque.
b) With 10% torque assistance by the steering motor 114, apply input torque to rotate the steering wheel 102, 360 degrees anti-clockwise direction 122 and 360 degrees rotation in clockwise direction 124, comfortably.
c) With 50%, 75%, 100% torque assistance by the steering motor 114, repeat above steps.

Based on the above response, the set of input signals are measured by the controller 110, and stored in the memory element 106 to generate the data set 108. The data set 108 is then used by the torque assist model 112 comprising Machine Learning (ML) algorithms and the neural network, to understand the torque pattern of the driver. Then the torque assist model 112 is trained with the data set 108 and thereon generates required torque specific to the driver profile and subsequently for other drivers.

The set of input signals from the driver during the learn mode is stored in the memory element 106 of the controller 110. The different maneuvers and their corresponding curve sets is saved under driver profiles, essentially making necessary for each driver of a particular vehicle to use the default (pre-tuned) curve sets or train the controller 110 and create respective customized tuning set. The controller 110 also suggests corrections and improvements if physically possible (by the driver) and logically/geographically (road conditions). If the driver feels a need to re-tune the controller 110 in accordance to her/his expectation, the learn mode is activated again followed by the aforementioned steps.

According to present invention, the controller 110 adapts to the strength of the driver and his/her ability to steer the vehicle. The controller 110 of the EPS system 100 measures the input signals and stores in the memory element 106 and uses for assisting the steering. In an embodiment, the controller 110 is configured to adapt to the steering capability of the driver as the driver ages. In other words, adapts to the diminishing strength of the driver. The controller 110 dynamically learns and tunes the various steering control parameters for the driver in the existing EPS system. The controller 110 allows dynamic tuning of the steering assistance based on a driver's need. The torque assist model 112 is capable to receive data or information stored by the controller 110 and uses it to determine the required torque. The controller 110 enables the driver a dynamic assistance as she/he ages or gets injured or weakens or grows stronger to get the steering assistance re-tailored for her/his needs. The method is simple and does not compromise the controllability of the steering of the vehicle.

It should be understood that embodiments explained in the description above are only illustrative and do not limit the scope of this invention. Many such embodiments and other modifications and changes in the embodiment explained in the description are envisaged. The scope of the invention is only limited by the scope of the claims.

## Claims

1. A controller (110) to assist steering of a vehicle having an Electronic Power Steering (EPS) system (100), said controller (110) adapted to:
measure a set of input signals on rotation of a steering wheel (102) by a driver, at different level of torque assistance from a steering motor (114) of said EPS system (100);
store said set of input signals measured for different level of torque assistance as a data set (108) in a memory element (106) of said controller (110);
process said data set (108) through a torque assist model (112) and calculate a required torque, and
drive said steering motor (114) to provide said required torque to a steering rack (120) of said EPS system (100) and assist said driver in steering said vehicle.

2. The controller (110) as claimed in claim 1, wherein said set of input signals comprises an input torque of a driver, a rotation angle of said steering wheel (102) and a time taken for corresponding rotation of said steering wheel (102).

3. The controller (110) as claimed in claim 2, wherein said controller (110) is adaptable to measure said plurality of input torque after a learn mode is active while said vehicle is in any one of a stationary state and a driven state.

4. The controller (110) as claimed in claim 3, wherein during said learn mode, said driver is instructed to follow a test sequence comprising rotation of said steering wheel (102) to certain angle at different level of torque assistance by said steering motor (114) selected from a group comprising 0%, 25%, 50%, 75%, 100%, and between said levels.

5. The controller (110) as claimed in claim 2, wherein said torque assist model (112) comprises at least one of a Machine Learning Model and a Neural Network, and is function of at least one of a width of said vehicle, a wheelbase, a length of an axle, a weight of said vehicle, velocity of said vehicle, a geographical location, characteristics of said steering motor (114) and a driver's profile.

6. The controller (110) as claimed in claim 1, wherein at least one data set (108) is stored for at least one driver in said memory element (106).

7. A method for assisting steering a vehicle having an Electronic Power Steering (EPS) system (100), said method comprising the steps of:
measuring a set of input signals on rotation of a steering wheel (102) by a driver, at different level of torque assistance from a steering motor (114) of said EPS system (100);
storing said set of input signals measured for different level of torque assistance as a data set (108) in a memory element (106) of a controller (110);
processing said data set (108) through a torque assist model (112) and calculate a required torque, and
driving said steering motor (114) to provide said required torque to a steering rack (120) of said EPS system (100) and assisting said driver in steering said vehicle.

8. The method as claimed in claim 7, wherein said set of input signals comprises an input torque of a driver, a rotation angle of said steering wheel (102) and a time taken for corresponding rotation of said steering wheel (102).

9. The method as claimed in claim 8, wherein said measuring said set of input signals is performed after a learn mode is activated while said vehicle is in any one of a stationary state and a driven state.

10. The method as claimed in claim 8, wherein said measuring plurality of input torque comprises instructing said driver to follow a test sequence of rotating of said steering wheel (102) to certain angle at different level of torque provided by said steering motor (114) selected from a group comprising 0%, 25%, 50%, 75%, 100% and between said levels.

11. The method as claimed in claim 8, wherein said torque assist model (112) comprises at least one of a Machine Learning Model and a Neural Network, said torque assist model (112) is function of at least one of a width of said vehicle, a wheelbase, a length of an axle, a weight of said vehicle, velocity of said vehicle, characteristics of said steering motor (114), a geographical location and a driver's profile.

12. The method as claimed in claim 7, wherein storing said plurality of input torque as data set (108) comprises storing for at least one driver in said memory element (106).
